# EUROPÄISCHE PATENTSCHRIFT

(11) **EP 1 692 009 B1**
(45) Veröffentlichungstag und Bekanntmachung des Hinweises auf die Patenterteilung: **14.11.2007**
(21) Anmeldenummer: 04802844.3
(22) Anmeldetag: 26.11.2004
(51) Int. Cl.: B60R 5/04, E05C 19/06, E05B 65/00

(54) **HUTABLAGE UND HALTERUNG EINER HUTABLAGE SOWIE FAHRZEUG MIT EINER SOLCHEN HUTABLAGE UND/ODER HALTERUNG**
PARCEL SHELF MOUNTING FOR A PARCEL SHELF AND VEHICLE WITH SUCH A PARCEL SHELF AND/OR MOUNTING
PLAGE ARRIERE, SUPPORT POUR PLAGE ARRIERE ET VEHICULE POURVU D'UNE PLAGE ARRIERE ET/OU D'UN SUPPORT DE CE TYPE

(30) Priorität: 06.12.2003 DE 10357097
(43) Veröffentlichungstag der Anmeldung: 23.08.2006
(73) Patentinhaber: Wilhelm Karmann GmbH, 49084 Osnabrück (DE)
(72) Erfinder: VAN BERKUM, Wim, 49179 Ostercappeln (DE)
(86) Internationale Anmeldenummer: PCT/DE2004/002635
(87) Internationale Veröffentlichungsnummer: WO 2005/056338

(56) Entgegenhaltungen:
- EP-A- 0 090 921
- DE-A1- 3 203 940
- PATENT ABSTRACTS OF JAPAN Bd. 2000, Nr. 12, 3. Januar 2001 (2001-01-03) -& JP 2000 255322 A (KASAI KOGYO CO LTD), 19. September 2000 (2000-09-19)
- PATENT ABSTRACTS OF JAPAN Bd. 2003, Nr. 05, 12. Mai 2003 (2003-05-12) & JP 2003 025918 A (NISHIKAWA KASEI CO LTD), 29. Januar 2003 (2003-01-29)

## Beschreibung

Die Erfindung betrifft eine Hutablage nach dem Oberbegriff des Anspruchs 1 und eine Halterung zur Arretierung einer Hutablage nach dem Oberbegriff des Anspruchs 9.

Die Erfindung betrifft eine bewegliche Hutablage mit einer Halterung zu deren sicherer Arretierung. Die Hutablage ist beweglich, also insbesondere abnehmbar. Die Erfindung betrifft weiterhin eine Vorrichtung zum Halten einer solchen Hutablage, also die Halterung selbst. Schließlich betrifft die Erfindung auch ein Fahrzeug, nämlich ein Kraftfahrzeug, insbesondere ein Personenkraftfahrzeug, also z.B. ein Cabrioletfahrzeug, mit einer solchen Hutablage oder mit einer durch eine solche Halterung arretierbaren Hutablage.

Aus der DE 699 03 212 T2 ist ein Personenkraftfahrzeug mit einer schwenkbaren Ablageplatte bekannt. Die Ablageplatte ist zwischen einer ersten Position, in der sie sich zwischen einer Vorderkante des Kofferraumdeckels und einer den vorderen Bereich des Kofferraumes begrenzenden Wand befindet, und einer zweiten Position, in der sie sich unterm dem Kofferraumdeckel befindet, schwenkbar. Die Ablagenplatte ist mit dem Kofferraumdeckel derart verbunden, dass sie der Öffnungs- und Schließbewegung des Kofferraumdeckels folgt.

Aus der DE 198 04 220 A1 ist eine Vorrichtung zum Auswechselbaren Halten von Abdeckungselementen an Kraftfahrzeugen bekannt. Das Abdeckungselement ist dabei in einem Rahmen gehalten und zu einer Außenseite hin zusammenklappbar ausgebildet.

Aus der DE 43 28 886 C2 ist eine Abdeckung für einen Fondstauraum eines Cabrioletfahrzeugs bekannt, die eine Rollladenanordnung sowie eine klappbare Schottwand umfasst. Zum Verschließen des Stauraums werden Rollladenanordnung und Schottwand zueinander derart justiert, dass eine Oberkante der Schottwand bündig mit der Rolllandeanordnung abschließt.

Spezielle Halterungen oder Arretierungsvorrichtungen der Abdeckungen sind in den genannten Dokumenten nicht erwähnt.

Eine Hutablage nach dem Oberbegriff des Anspruchs 1 und eine Halterung nach dem Oberbegriff des Anspruchs 9 sind aus der JP-A-2000-255322 bekannt.

Die Erfindung besteht darin, eine Halterung, die besonders zum Einsatz bei der Arretierung von beweglichen Ablageflächen, also z.B. Ablageplatten, wie sie bei einer Hutablage Verwendung finden, und dergleichen, in einem Kraftfahrzeug geeignet ist, sowie eine mit der Halterung versehene Ablagefläche, also z.B. die Hutablage selbst, anzugeben.

Diese Aufgabe wird hinsichtlich der Hutablage erfindungsgemäß mit den Merkmalen des Anspruchs 1 gelöst. Dazu ist bei einer beweglichen Ablagefläche, also insbesondere der Hutablage, zur Verwendung in einem Kraftfahrzeug, mit einer Halterung zu deren Arretierung und mit einer insbesondere einstückigen, die Ablagefläche bildenden Ablageplatte, wobei die Halterung ein zum Lösen der Arretierung vorgesehenes Betätigungselement, insbesondere einen Taster, umfasst, vorgesehen, dass das Betätigungselement einen zum Lösen einer die Ablagefläche arretierenden Rastverbindung vorgesehenen Auslöser umfasst, dass die Rastverbindung zwischen einer mit einem fahrzeugfesten Teil verbundenen Rastfeder und einem mit der Ablagefläche verbundenen Rastelement erfolgt. Dabei ist der Auslöser zum Eindringen und Aufweiten eines Zwischenraums zwischen Rastfeder und Rastelement beim Lösen der Rastverbindung ausgebildet und vorgesehen.

Hinsichtlich der Halterung selbst wird diese Aufgabe erfindungsgemäß gelöst durch die Merkmale des Anspruchs 9. Dazu ist bei einer Halterung zur Arretierung einer beweglichen Ablagefläche, also insbesondere der Hutablage, in einem Kraftfahrzeug, die ein zum Lösen der Arretierung vorgesehenes Betätigungselement, insbesondere einen Taster umfasst, vorgesehen, dass das Betätigungselement einen zum Lösen einer die Ablagefläche arretierenden Rastverbindung vorgesehenen Auslöser umfasst und dass die Rastverbindung zwischen einer mit einem fahrzeugfesten Teil verbundenen Rastfeder und einem mit der Ablagefläche verbundenen Rastelement erfolgt. Auch hier ist der Auslöser zum Eindringen und Aufweiten eines Zwischenraums zwischen Rastfeder und Rastelement beim Lösen der Rastverbindung ausgebildet und vorgesehen.

Aus der DE 196 12 066 ist eine Verriegelungsvorrichtung für eine Klappe, z.B. in Form eines Handschuhkastendeckels bekannt. Dabei wird der Handschuhkastendeckel in geschlossener Position mittels einer Schenkelfeder und einem Verriegelungselement gehalten. Zum Öffnen der Klappe ist ein Griffteil vorgesehen, das mittels eines Schwenkteils das Verriegelungselement derartig betätigt, dass die Verriegelung zwischen Verriegelungselement und Schwenkfeder gelöst wird, indem Verriegelungselement und Schwenkfeder voneinander getrennt werden. Ein Eindringen eines Betätigungselements in den Zwischenraum zwischen den beiden die Rastverbindung bildenden Elementen ist nicht gezeigt.

Der Vorteil der Erfindung besteht darin, dass die Ablagefläche oder Hutablage leicht und von Hand zu lösen ist. Die Hutablage ist nach gelöster Arretierung beweglich, so dass ein Abnehmen oder ein Schwenken der Hutablage möglich wird. Dies ist zweckmäßig um unter der Hutablage zur Verfügung stehenden Stauraum zugänglich zu machen. Die Halterung eignet sich neben der Arretierung von Ablageflächen, also horizontalen oder zumindest im Wesentlichen horizontalen Flächen, ebenso für eine Arretierung von vertikalen oder zumindest im Wesentlichen vertikalen Flächen, z.B. Verkleidungselementen. Um im Falle einer Lösung der Arretierung ein Herabfallen des Verkleidungselementes zu vermeiden, ist günstig, wenn das Verkleidungselement schwenkbar ausgeführt ist, also auch nach dem Lösen der Arretierung noch an einer Achse oder dergleichen gehaltert ist, oder wenn das Verkleidungselement durch zumindest einen zusätzlichen Haken oder dergleichen gehaltert ist. Für diesen Aspekt der Erfindung ist der im Folgenden durchgängig verwendeten Begriff "Ablagefläche" und "Ablageplatte" so zu verstehen, dass Verkleidungsflächen bzw. Verkleidungsplatten mit umfasst sind.

Vorteilhafte Ausgestaltungen der Erfindung sind Gegenstand der auf die jeweiligen unabhängigen Ansprüche rückbezogenen Unteransprüche.

Wenn an der Unterseite der Ablageplatte ein Griffmuldenunterteil angeordnet ist, bildet dieses zusammen mit der Ablageplatte eine Griffmulde, die bei betätigtem Betätigungselement zugänglich ist. Es ergibt sich also ein definierter Abschnitt, in den die Hand des Benutzers zum Bewegen oder Abnehmen der Ablageplatte eingreifen kann.

Bevorzugt ist der Auslöser Bestandteil, insbesondere einstückiges Bestandteil, eines zum Betätigungselement gehörenden Tasterunterteils, das ein Führungselement umfasst. Das Führungselement wiederum ist in einer der Ablageplatte zugeordneten, insbesondere einstückig mit dieser verbundenen Führungskontur gehaltert. Der Taster wird damit auf besonders einfache Weise an der Ablageplatte gehaltert. Die Montage des Tasters wird vereinfacht, weil dieser im Wesentlichen nur mit seinem Führungselement in die Führungskontur eingeführt werden muss. Trotzdem ist aufgrund der Form der Führungskontur und aufgrund des formschlüssigen Eingriffs des Führungselementes in die Führungskontur eine sichere Halterung des Tasters gewährleistet.

Wenn die Führungskontur einen Begrenzungsstift aufweist, der in eine Ausnehmung des Führungselementes eingreift, ist auf einfache Weise der Weg, um den sich das Führungselement beim Betätigen des Tasters in die Führungskontur hinein und bei nicht betätigtem Taster aus der Führungskontur heraus bewegen kann, begrenzt. Durch geeignete Wahl sowohl der Position des Begrenzungsstiftes als auch der Ausmasse der korrespondierenden Ausnehmung ist ein unerwünschtes Herausfallen des Tasters aus der Ablageplatte verhindert.

Wenn die Führungskontur einen Fortsatz aufweist, auf der ein Federelement, z.B. eine als Spiralfeder ausgeführte Tasterfeder, angeordnet ist, das unter Spannung an einer Unterseite des Tasters, insbesondere am Tasterunterteil, anliegt, hält das Federelement den Taster im nicht betätigtem Zustand in einer definierten Position. Des Weiteren muss beim Betätigen des Tasters die Federkraft des Federelementes überwunden werden, so dass ein unbeabsichtigtes Lösen der Arretierung weitgehend verhindert ist.

Vorteilhaft ist der Auslöser als am freien Ende angeschrägter Keil ausgeführt, wobei der Auslöser sich senkrecht in Bezug auf eine durch die Auflageplatte definierte Ebene unter dem Taster befindet. Mit dem Keil ist gewährleistet, dass die Rastverbindung besonders einfach gelöst werden kann, weil der Keil mit einer entsprechend abgewinkelten Zunge der Rastfeder zusammenwirken kann. Es erfolgt somit eine möglichst großflächige Übertragung der Kraft auf die Rastfeder. Eine wirksame Kraftübertragung ist ebenfalls in günstiger Weise gewährleistet, wenn sich der Auslöser senkrecht unter dem Taster erstreckt.

Bevorzugt ist der Auslöser am freien Ende mittig geschlitzt. Dann kann eine an der Rastfeder vorgesehene Rastnocke in den Schlitz am Auslöser eintreten. D.h. der Taster kann vollständig betätigt werden, so dass die Griffmulde als Raum für die Hand vollständig zugänglich wird, ohne dass der Weg des Tasters durch die etwa an der Unterkante des Auslösers anliegenden Rastnocke begrenzt wäre.

Weiter bevorzugt läuft auch das Rastelement, in das die Rastnocke der Rastfeder eingreift, am freien Ende keilförmig, also in Form einer Rampe, aus. Dies ist sinnvoll, damit sich beim Einsetzen oder Wiederanbringen der Ablageplatte die Rastverbindung möglichst einfach schließt. Die Rampe drückt dabei zunächst die Rastnocke zur Seite, so dass die Rastfeder ausgelenkt wird. Beim Andrücken der Ablagefläche gleitet die Rastnocke an der Rampe immer höher und die Rastfeder wird entsprechend weiter ausgelenkt. Die Rastverbindung ist geschlossen, wenn die Rastnocke nach dem Ende der Rampe in eine dafür vorgesehene Ausnehmung am Rastelement eingreift.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

### Darin zeigen

- Fig. 1: eine schematisch vereinfachte perspektivische Darstellung einer Hutablage,

- Fig. 2: einen Vertikalschnitt durch die Hutablage im Bereich einer zu deren Arretierung vorgesehenen Halterung,
- Fig. 3: eine schematisch vereinfachte perspektivische Darstellung eines Aufnahmeelementes zur Aufnahme der Hutablage,
- Fig. 4: eine schematisch vereinfachte perspektivische Darstellung eines Rastelementes in einem Vertikalschnitt,
- Fig. 5: eine schematisch vereinfachte perspektivische Darstellung eines Tasters zur Lösung der Arretierung der Hutablage ebenfalls in einem Vertikalschnitt,
- Fig. 6: eine schematisch vereinfachte perspektivische Darstellung einer die Hutablage bildenden Ablagefläche mit einer Führungskontur zur Aufnahme des Tasters ebenfalls in einem teilweise ausgeführten Vertikalschnitt und
- Fig. 7: eine Rastfeder, die zusammen mit dem Rastelement die Rastverbindung zur Arretierung der Hutablage bildet.

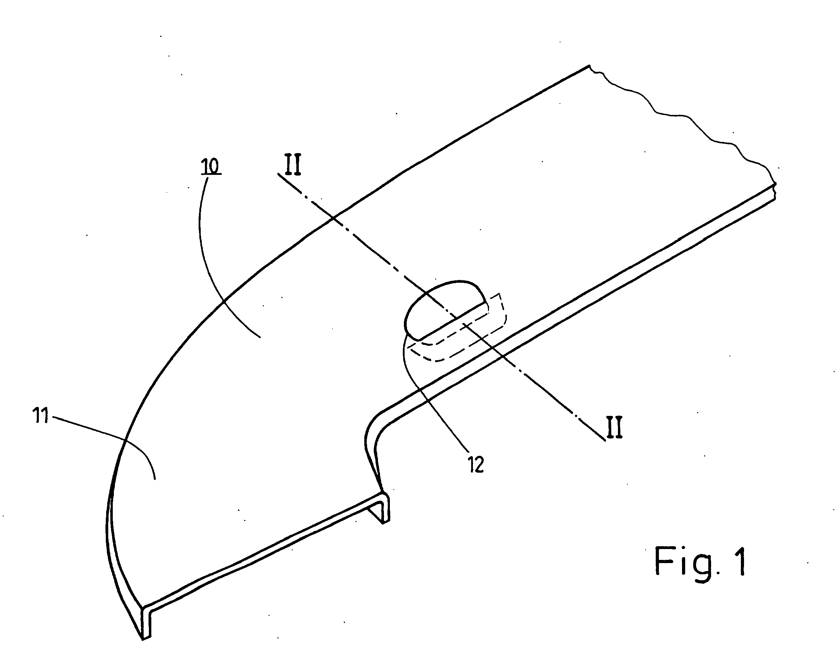

Fig. 1 zeigt eine schematisch vereinfachte perspektivische Darstellung einer Hutablage 10, als Beispiel für eine bewegliche Ablagefläche. Die Hutablage 10 umfasst eine Ablageplatte 11 sowie zumindest einen Taster 12 zum Lösen einer die Hutablage 10 haltenden Arretierung.

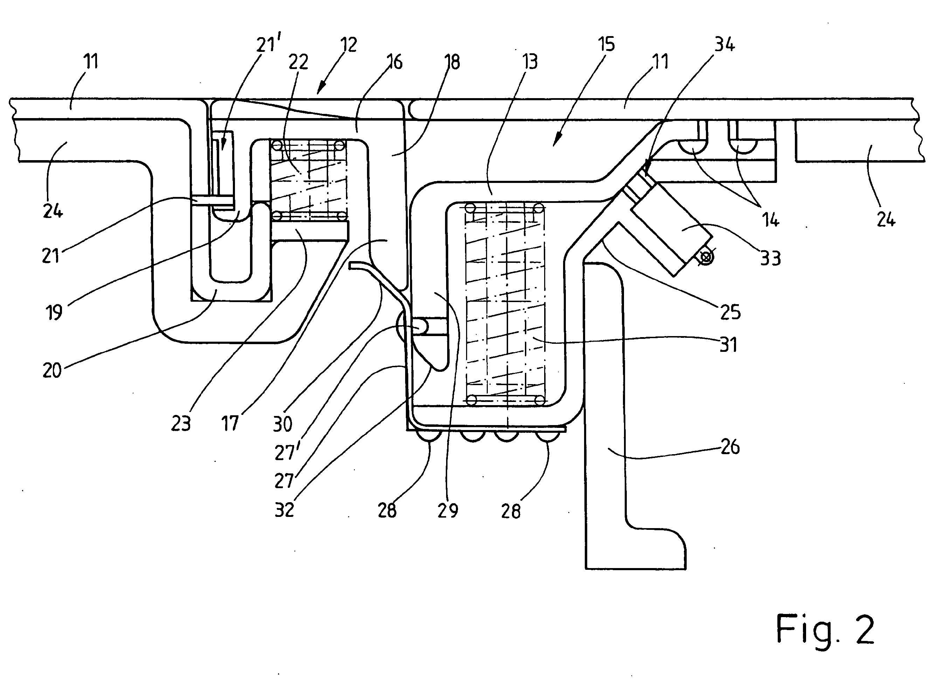

Fig. 2 zeigt zur näheren Erläuterung der Arretierung der Hutablage 10 einen Schnitt durch dieselbe entlang der Linie II-II in Fig. 1. In der Darstellung ist ersichtlich, dass die Hutablage 10 neben der Ablageplatte 11 und dem Taster 12 noch ein Griffmuldenunterteil 13 umfasst. Letzteres ist mit der Ablageplatte 11 verschweißt. Dazu ist eine Ablagenplattenschweißverbindung 14 dargestellt, die in Form von verflüssigtem Material der Ablageplatte 11 eine zu diesem Zweck vorgesehene Ausnehmung im Griffmuldenunterteil 13 erfasst. Das Griffmuldenunterteil 13 ist so geformt, dass es im Bereich des Tasters 12 mit der Ablageplatte 11 eine Griffmulde 15 bildet.

Der Taster 12 wiederum umfasst ein Tasterunterteil 16 mit einem in einem Keil 17 endenden Auslöser 18 und einem Führungselement 19. Letzteres wird von einer in die Ablageplatte 11 geformten Führungskontur 20 geführt. In der Schnittdarstellung erscheint die Führungskontur 20 als Topf, in den das als zapfen erscheinende Führungselement 19 formschlüssig eingreift. Der Taster 12 ist in einer nicht betätigten Position dargestellt. Entsprechend befindet sich das Führungselement 19. am oberen Ende der Führungskontur 20. Beim Betätigen des Tasters 12 dringt das Führungselement 19 weiter in die Führungskontur 20 ein. Die Tiefe der Führungskontur 20 begrenzt den Weg des Tasters 12 beim Betätigen. Zum Halten des nicht betätigten Tasters 12 in der Führungskontur 20 ist ein Begrenzungsstift 21 vorgesehen, der in der Ablageplatte 11 im Bereich der Führungskontur 20 angeordnet ist und mit einem vorstehenden Ende in eine dafür vorgesehene Ausnehmung 21' am Tasterunterteil 16, insbesondere am Führungselement 19 des Tasterunterteils 16, eingreift. Der Begrenzungsstift 21 begrenzt den Weg des nicht betätigten Tasters 12 und hält das Führungselement 19 zumindest so weit in der Führungskontur 20, dass eine sichere Halterung des Tasters 12 speziell im nicht betätigten Zustand gewährleistet ist. Beim Betätigen wird der Taster 12 gegen den Druck eines Federelementes, z.B. einer insbesondere als Spiralfeder ausgeführten Tasterfeder 22, niedergedrückt. Diese befindet sich zwischen einer durch einen Fortsatz 23 der Führungskontur 20 gebildeten Auflage und der Unterseite des Tasterunterteils 16. Die Tasterfeder 22 ist dabei derart vorgespannt, dass sie das Tasterunterteil 16 in eine durch den Begrenzungsstift festgelegte Position hebt. Die Oberfläche des Tasters 12 ist in dieser Position bündig mit der Oberfläche der Ablageplatte 11.

Die Ablageplatte 11 weist mehrere, parallel oder zumindest im Wesentlichen parallel zur längsten Achse der Ablageplatte 11 verlaufende Versteifungsrippen 24 auf, die in der Schnittdarstellung in Fig. 1 als massive Elemente erscheinen. Eine oder einzelne Versteifungsrippen 24 sind im Bereich des Tasters 12 derart geformt, dass sie der Außenkontur der Führungskontur 20 folgen. Die oder jede betreffende Versteifungsrippe 24 stützt damit die Führungskontur 20 und verhindert eventuelle unerwünschte Verformungen derselben beim Betätigen des Tasters 12.

Im Bereich des Griffmuldenunterteils 13 ist als fahrzeugfestes Element ein Aufnahmeelement 25 angeordnet. Dargestellt ist die Situation, dass das Aufnahmeelement 25 als separate Komponente ausgeführt und an einem ebenfalls fahrzeugfesten Befestigungshalter 26 angebracht ist.

Das Aufnahmeelement 25 ist geeignet geformt, so dass sich eine geeignete Kontur zur lagerichtigen Justierung der Hutablage 10 ergibt. An dieser Kontur liegt das Griffmuldenunterteil 13 zumindest abschnittsweise an.

An dem Aufnahmeelement 25 ist eine Rastfeder 27 mit einer Rastnocke 27', z.B. durch Verschweißen, wie anhand der dargestellten Schweißdome 28 ersichtlich, angebracht. Die Rastnocke 27' greift bei bestehender Rastverbindung in eine dazu vorgesehene Öffnung an einem als Rastelement 29 ausgeführten Fortsatz des Griffmuldenunterteils 13'ein. Am freien Ende der Rastfeder 27 verläuft diese oberhalb der Rastnocke 27' in Form einer abgewinkelten Zunge 30. Der Winkel der Zunge 30 entspricht im Wesentlichen der Steigung des Keils 17 am Ende des Auslösers 18.

In der dargestellten Position ist die Hutablage 10 arretiert, weil die in das Rastelement 20 eingreifende Rastnocke 27' ein Abheben oder ein unerwünschtes Lösen der Hutablage 10 verhindert. Zum Lösen der Hutablage 10 wird der Taster 12 betätigt und dazu gegen den Druck der Tasterfeder 22 niedergedrückt. Dabei dringt zum einen das Führungselement 19 in die Führungskontur 20 ein. Zum anderen drückt der Keil 17 am Ende des Auslösers 18 auf die Zunge 30 am Ende der Rastfeder 27. Beim weiteren Betätigen des Tasters 12 lenkt der Keil 17 die Rastfeder 27 aus, so dass schließlich die Rastnocke 27' aus dem Rastelement 29 gehoben wird. Die Tiefe der Führungskontur 20 und die Ausmasse der Ausnehmung 21' sind dazu so dimensioniert, dass der Keil 17 die Rastfeder 27 so weit auslenken kann, dass die Rastverbindung gelöst wird. Der Auslöser 18 ist also zum Eindringen und Aufweiten eines Zwischenraums zwischen Rastfeder 27 und Rastelement 29 beim Lösen der Rastverbindung ausgebildet und vorgesehen. Dieser Zwischenraum besteht zunächst im Wesentlichen im Bereich der Zunge 30. Beim Aufweiten des Zwischenraums, also beim Auslenken der Rastfeder 30, vergrößert der Auslöser 18 oder der Keil 17 an dessen Ende den Zwischenraum nach und nach so weit, bis schließlich die Rastnocke 27' aus dem Rastelement 29 gehoben wird. Elemente der Rastverbindung sind dementsprechend die Rastfeder 27 mit der Rastnocke 27', das Rastelement 29, in das die Rastnocke 27' bei bestehender Rastverbindung eingreift, sowie der Keil 17 am Ende des Auslösers 18 zum Lösen der Rastverbindung.

Sobald das Rastelement 29 frei ist, wird die Hutablage 10 durch ein unter Vorspannung zwischen dem Aufnahmeelement 25 und dem Griffmuldenunterteil 13 befindliches Federelement, z.B. eine als Spiralfeder ausgeführte Hubfeder 31, angehoben. Die Federkraft der Hubfeder 31 ist dazu so dimensioniert, dass zumindest ein Anheben der Hutablage 10 möglich ist. Dies verhindert auch ein unerwünschtes erneutes Einrasten der Rastverbindung. Im nicht dargestellten angehobenen Zustand der Hutablage wird die Griffmulde 15 zugänglich. D.h. ein Bediener kann mit derselben Hand, mit der er zuvor den Taster 12 betätigt hat, in die Griffmulde 15 fassen, um die Hutablage durch Druck gegen die Unterseite der Ablagefläche 11 im Bereich der Griffmulde 15 weiter anzuheben. Für eine schwenkbar bewegliche Hutablage 10 (nicht dargestellt) ist auf eine eine Schwenkbewegung ermöglichende Kontur der Auflagefläche, insbesondere im Bereich des Tasters 12 sowie ausreichende Abstände zwischen verschwenkten und ortsfesten Elementen, z.B. dem Rastelement 29 und der Hubfeder 31 zu achten.

Beim Arretieren der Hutablage 10 wird diese zunächst in der vorgesehenen Position justiert. Dabei sind die auf die Außenkontur der Führungskontur 20 abgestimmte Gegenkontur der Auflagefläche 24 und ein diagonaler Abschnitt des Griffmuldenunterteils 13, der an einem korrespondierenden Abschnitt des Aufnahmeelementes 25 anliegt, hilfreich. Durch leichten Druck auf die Oberseite der Ablageplatte 11 wird die Federkraft der Hubfeder 31 überwunden, so dass die Rastnocke 27' der Rastfeder 27 an einer am Ende des Rastelementes 29 gebildeten Rampe 32 entlang gleitet und die Rastfeder 27 ausgelenkt wird. Sobald die vorgesehene Position der Hutablage 10 erreicht ist, greift die Rastnocke 27' in das Rastelement 29 ein, so dass die Hutablage wieder arretiert ist. Die Rastverbindung verhindert eine vertikale Beweglichkeit der Hutablage 10. Eine horizontale Beweglichkeit der Hutablage 10 ist durch die oben bereits im Zusammenhang mit der Vorjustierung der Hutablage 10 beim Einsetzen beschriebenen Konturen verhindert.

Zur Überwachung der Hutablage 10 auf eine korrekte Arretierung ist ein Mikroschalter 33 vorgesehen. Dieser ist am Aufnahmeelement 25 angebracht und greift mit einem Tastkopf durch eine zu diesem Zweck vorgesehene Öffnung 34 im Aufnahmeelement 25. Die Öffnung 34 befindet sich in einem Abschnitt des Aufnahmeelementes 25, an dem bei arretierter Hutablage 10 ein Abschnitt des Griffmuldenunterteils 13 anliegt. Der betreffende Abschnitt des Griffmuldenunterteils 13 betätigt den Mikroschalter 33 so das daraus in an sich bekannter und daher nicht dargestellter und auch nicht näher beschriebener Art und Weise ein elektrisches Signal ableitbar ist, das die korrekte Arretierung der Hutablage anzeigt. Sobald die Rastverbindung gelöst ist, wird die Hutablage 10 durch die Hubfeder 31 zumindest so weit angehoben, dass die Griffmulde 15 zugänglich wird, dabei wird auch der Mikroschalter 33 frei. Aus dieser Schaltsituation des Mikroschalters 33 ist ein elektrisches Signal ableitbar, das die gelöste Arretierung der Hutablage anzeigt.

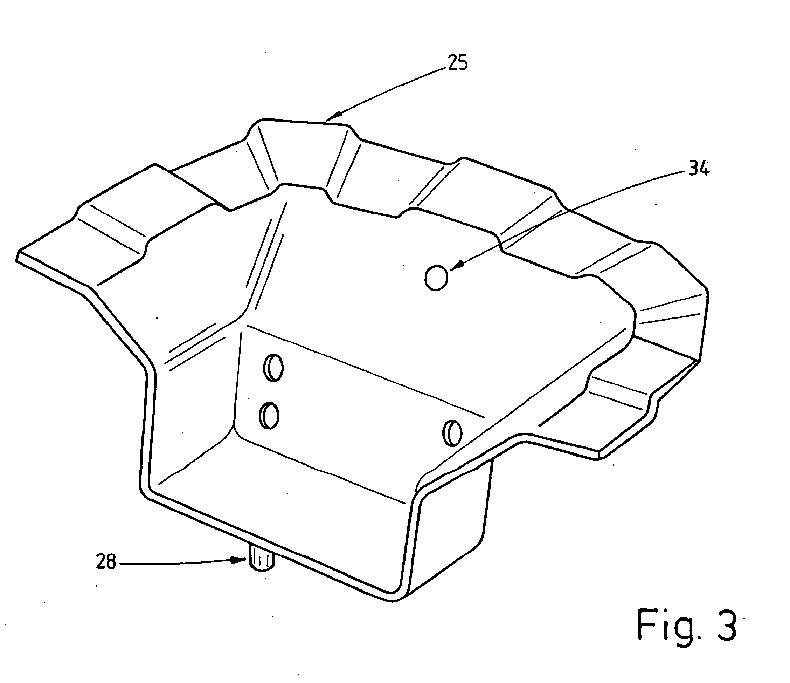

Fig. 3 zeigt in einer ebenfalls schematisch vereinfachten, perspektivischen Darstellung das Aufnahmeelement 25, das zur Aufnahme der Hutablage im Bereich der Griffmulde 15 vorgesehen ist. In der Darstellung erkennt man die Öffnung 34 für den Mikroschalter 33 sowie einen der Schweißdome 28 mit denen die Rastfeder 27 mit dem Aufnahmeelement 25 verbunden wird.

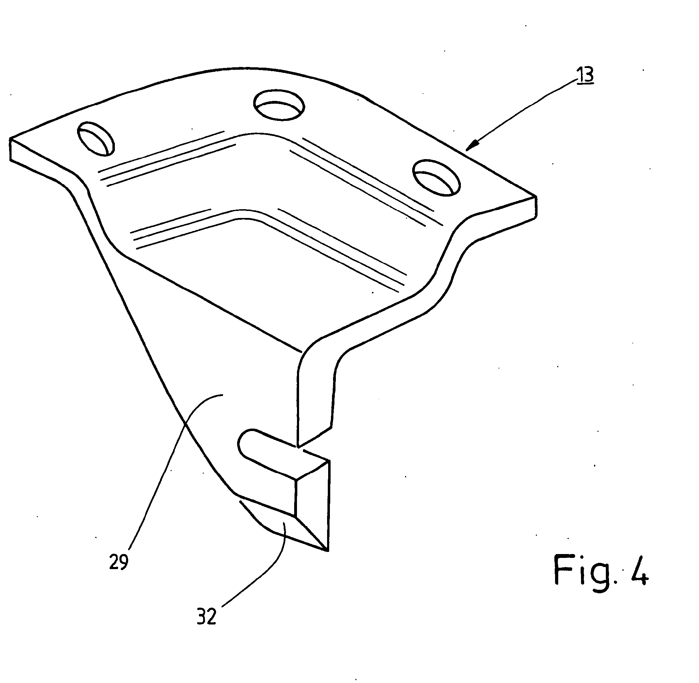

Fig. 4 zeigt in einer schematisch vereinfachten, perspektivischen Darstellung das Rastelement 29 in einem Vertikalschnitt. Man erkennt einen sich senkrecht nach unten erstreckenden freien Schenkel des Rastelementes 29, der an seinem freien Ende angeschrägt ausläuft und damit die Rampe 32 bildet. Etwa im Mittelbereich des Schenkels ist ein als horizontal ausgerichtetes Langloch ausgeführter Rastbereich dargestellt, in den die Rastnocke 27' der Rastfeder 27 eingreift. Aufgrund des Vertikalschnittes ist nur eine Hälfte des Rastelementes 29 sichtbar.

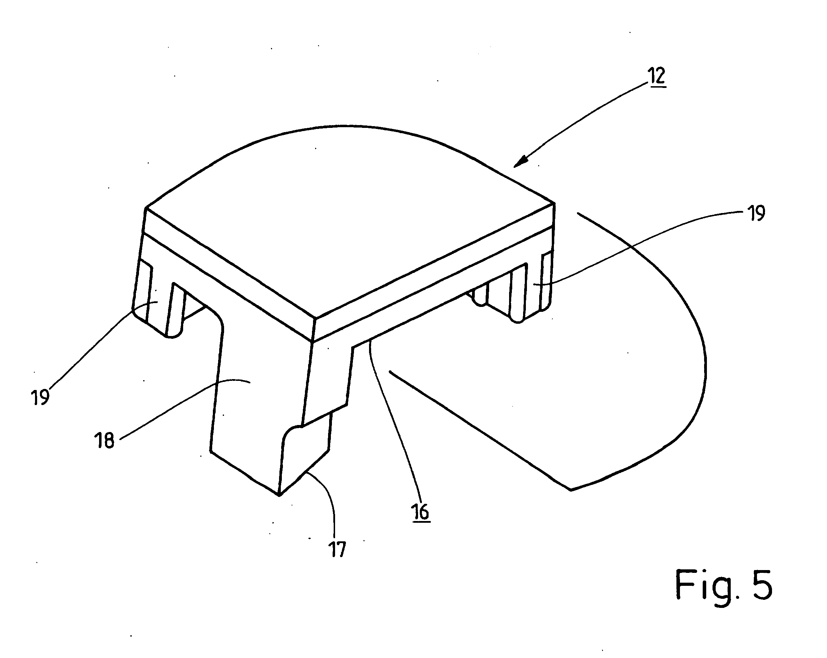

Fig. 5 zeigt in einer schematisch vereinfachten, perspektivischen Darstellung den Taster 12 zur Lösung der Arretierung der Hutablage ebenfalls in einem Vertikalschnitt. Man erkennt, dass der Taster 12 einseitig eine Außenkontur in Form eines Halbkreises aufweist. Auf dieser Seite des Tasters 12 verläuft an der Unterseite des Tasters 12 entlang der kompletten Halbkreislinie, ggf. stückweise unterbrochen, die Führungskontur 19. Diese Form der Führungskontur 19 ermöglicht eine Halterung des Tasters 12 in der Richtung sämtlicher Raumkoordinaten. Die andere Seite des Tasters 12 ist gerade ausgeführt. An dieser Seite erstreckt sich senkrecht unter dem Taster 12 der Auslöser 18, der an seinem freien Ende angeschrägt ist und damit den Keil 17 aufweist. In dem Vertikalschnitt, der genau eine Hälfte des Tasters 12 zeigt, erkennt man zudem, dass der Auslöser 18 am freien Ende mittig geschlitzt ist. In diesen Schlitz kann die Rastnocke 27' beim Lösen der Arretierung eingreifen, so dass der Weg des Auslösers 18 nicht durch die Rastnocke 27' begrenzt ist.

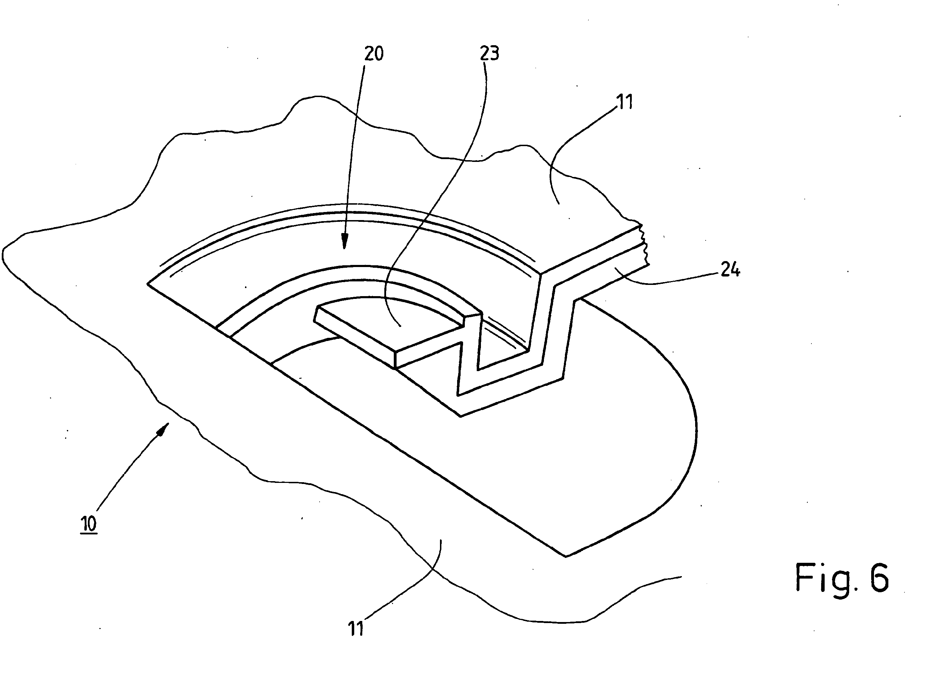

Fig. 6 zeigt eine schematisch vereinfachte, perspektivische Darstellung der die Hutablage bildenden Ablagefläche 11 mit der Führungskontur 20 zur Aufnahme des Tasters 12 ebenfalls in einem teilweise ausgeführten Vertikalschnitt. Man erkennt, dass die Führungskontur 20, korrespondierend zur entsprechenden Form des Führungselementes 19 des Tasters 12, in Form eines Halbkreises ausgeführt ist. Damit ist, wie bereits erwähnt, eine Fixierung des Tasters 12 in der Richtung sämtlicher Raumkoordinaten gewährleistet. Zum einen ist - wenn man sich die xy-Ebene komplanar zur größten Fläche der Ablageplatte 11 denkt - ein Verschieben des Tasters 12 in x- oder y-Richtung verhindert. Zum anderen ist ein unerwünschtes Kippen des Tasters 12 und damit eine unerwünschte Beweglichkeit in z-Richtung verhindert.

Ebenfalls dargestellt ist der Fortsatz 23, der bei montiertem Taster 12 die Tasterfeder 22 trägt.

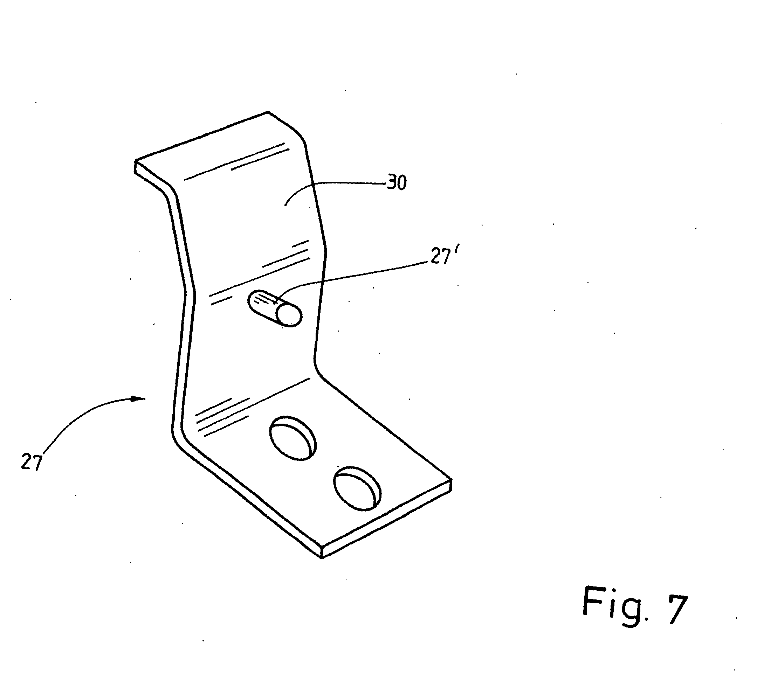

Fig. 7 zeigt abschließend der Rastfeder 27 mit der Rastnocke 27'. Man erkennt am freien Ende der Rastfeder 27 die abgewinkelte Zunge 30 (vgl. Fig. 2), die zum Lösen der Arretierung dem Auslöser 18 betätigt wird.
Am im montierten Zustand festliegenden Ende der Rastfeder 27 sind zwei Bohrungen erkennbar, in die die Schweißdome 28 des Aufnahmeelementes 25 zur Verbindung der Rastfeder 27 mit dem Aufnahmeelement 25 eingreifen.

Bezugszeichenliste
- 10: Hutablage
- 11: Ablageplatte
- 12: Taster
- 13: Griffmuldenunterteil
- 14: Ablagenplattenschweißverbindung
- 15: Griffmulde
- 16: Tasterunterteil
- 17: Keil
- 18: Auslöser
- 19: Führungselement
- 20: Führungskontur
- 21: Begrenzungsstift
- 21': Ausnehmung
- 22: Tasterfeder
- 23: Fortsatz
- 24: Verstärkungsrippe
- 25: Aufnahmeelement
- 26: Befestigungshalter
- 27: Rastfeder
- 27': Rastnocke
- 28: Schweißdom
- 29: Rastelement
- 30: Zunge
- 31: Hubfeder
- 32: Rampe
- 33: Mikroschalter
- 34: Öffnung

## Patentansprüche

1. Hutablage zur Verwendung in einem Kraftfahrzeug, mit einer Halterung zu deren Arretierung und mit einer insbesondere einstückigen, die Ablagefläche bildenden Ablageplatte (11), wobei die Halterung ein zum Lösen der Arretierung vorgesehenes Betätigungselement, insbesondere einen Taster (12), umfasst,
wobei eine die Ablagefläche arretierende Rastverbindung vorgesehen ist, und
wobei das Betätigungselement einen zum Lösen der Rastverbindung vorgesehenen Auslöser (18) umfasst,
**dadurch gekennzeichnet, dass** die Rastverbindung zwischen einer mit einem fahrzeugfesten Teil (26) verbundenen Rastfeder (27) und einem mit der Ablagefläche verbundenen Rastelement (29) erfolgt und dass der Auslöser (18) zum Eindringen und Aufweiten eines Zwischenraums zwischen Rastfeder (27) und Rastelement (29) beim Lösen der Rastverbindung ausgebildet und vorgesehen ist.

2. Hutablage nach Anspruch 1,
mit einem an der Unterseite der Ablageplatte (11) angeordneten Griffmuldenunterteil (13), das zusammen mit der Ablageplatte (11) eine Griffmulde (15) bildet, die bei betätigtem Betätigungselement zugänglich ist.

3. Hutablage nach Anspruch 1,
wobei der Auslöser (18) Bestandteil, insbesondere einstückiges Bestandteil, eines zum Betätigungselement gehörenden Tasterunterteils (16) ist, das ein Führungselement (19) umfasst, das in einer der Ablageplatte (11) zugeordneten, insbesondere einstückig mit dieser verbundenen Führungskontur (20) gehaltert ist.

4. Hutablage nach Anspruch 3,
wobei die Führungskontur (20) einen Begrenzungsstift (21) aufweist, der in eine Ausnehmung (21') des Führungselementes (19) eingreift.

5. Hutablage nach Anspruch 3 oder 4,
wobei die Führungskontur (20) einen Fortsatz (23) aufweist, auf der ein Federelement (22) angeordnet ist, das unter Spannung an einer Unterseite des Tasters (12), insbesondere am Tasterunterteil (16), anliegt.

6. Hutablage nach Anspruch 3, 4 oder 5,
wobei der Auslöser (18) als am freien Ende angeschrägter Keil (17) ausgeführt ist und wobei der Auslöser (18) sich senkrecht in Bezug auf eine durch die Auflageplatte (11) definierte Ebene unter dem Taster (12) befindet.

7. Hutablage nach Anspruch 6,
wobei der Auslöser (18) am freien Ende mittig geschlitzt ist.

8. Hutablage nach Anspruch 1,
wobei die Rastfeder (27) eine zum Eingriff in eine Ausnehmung am Rastelement (29) vorgesehene Rastnocke (27') aufweist und wobei das Rastelement (29) am freien Ende in Form einer Rampe (32) ausläuft.

9. Halterung zur Arretierung einer Hutablage mit einer eine Ablagefläche bildenden Ablageplatte (11) in einem Kraftfahrzeug, mit einem zum Lösen der Arretierung vorgesehenen Betätigungselement, insbesondere einem Taster (12),
wobei das Betätigungselement einen zum Lösen einer die Hutablage arretierenden Rastverbindung vorgesehenen Auslöser (18) umfasst, **dadurch gekennzeichnet, dass**
die Rastverbindung zwischen einer mit einem fahrzeugfesten Teil (26) verbundenen Rastfeder (27) und einem mit der Ablagefläche verbundenen Rastelement (29) erfolgt, und dass
der Auslöser (18) zum Eindringen und Aufweiten eines Zwischenraums zwischen Rastfeder (27) und Rastelement (29) beim Lösen der Rastverbindung ausgebildet und vorgesehen ist.

10. Halterung nach Anspruch 9, mit einem an der Unterseite der Ablageplatte (11) angeordneten Griffmuldenunterteil (13), das zusammen mit der Ablageplatte (11) eine Griffmulde (15) bildet, die bei betätigtem Betätigungselement zugänglich ist.

11. Halterung nach Anspruch 9,
wobei der Auslöser (18) Bestandteil, insbesondere einstückiges Bestandteil, eines zum Betätigungselement gehörenden Tasterunterteils (16) ist, das ein Führungselement (19) umfasst, das in einer der Ablageplatte (11) zugeordneten, insbesondere einstückig mit dieser verbundenen Führungskontur (20) gehaltert ist.

12. Halterung nach Anspruch 11,
wobei die Führungskontur (20) einen Begrenzungsstift (21) aufweist, der in eine Ausnehmung (21') des Führungselementes (19) eingreift.

13. Halterung nach Anspruch 11 oder 12,
wobei die Führungskontur (20) einen Fortsatz (23) aufweist, auf der ein Federelement (22) angeordnet ist, das unter Spannung an einer Unterseite des Tasters (12), insbesondere am Tasterunterteil (16), anliegt.

14. Halterung nach Anspruch 11, 12 oder 13,
wobei der Auslöser (18) als am freien Ende angeschrägter Keil (17) ausgeführt ist und wobei der Auslöser (18) sich senkrecht in Bezug auf eine durch die Auflageplatte (11) definierte Ebene unter dem Taster (12) befindet.

15. Halterung nach Anspruch 14,
wobei der Auslöser (18) am freien Ende mittig geschlitzt ist.

16. Halterung nach Anspruch 9,
wobei die Rastfeder (27) eine zum Eingriff in eine Ausnehmung am Rastelement (29) vorgesehene Rastnocke (27') aufweist und wobei das Rastelement (29) am freien Ende in Form einer Rampe (32) ausläuft.

17. Kraftfahrzeug mit einer Hutablage nach einem der Ansprüche 1 bis 8.

18. Kraftfahrzeug mit einer Halterung nach einem der Ansprüche 9 bis 16.

19. Kraftfahrzeug nach Anspruch 17 oder 18,
wobei an einem fahrzeugfesten Teil, insbesondere an einem Aufnahmeelement (25), auf dem die Ablageplatte (11) mittelbar oder unmittelbar aufliegt, ein Mikroschalter (33) angeordnet ist, der mit einem Tastkopf durch eine Öffnung (34) des Aufnahmeelementes (25) hindurchragt, derart, dass bei aufliegender Auflageplatte (11) der Mikroschalter (33) betätigt ist.

20. Kraftfahrzeug nach Anspruch 19,
wobei ein auf einer Schaltstellung des Mikroschalters (33) basierendes elektrisches Signal zur Ansteuerung einer Anzeige hinsichtlich der korrekten Positionierung und/oder Arretierung der Ablagefläche bzw. der Ablageplatte (11) vorgesehen ist.

## Claims

1. A rear parcel shelf for use in a motor vehicle, having a holding device for its retention and having an, in particular one-piece storage plate (11) forming the storage surface, whereby the holding device includes an actuating member, a push-button (12), provided for releasing the retention, in particular
whereby a detent connection which locks the storage surface in place is provided, and
whereby the actuating member includes a releasing device (18) provided for releasing the detent connection, **characterised in that** the detent connection is effected between a detent spring (27), which is connected to a part (26) which is firmly attached to the vehicle, and a detent member (29), which is connected to the storage surface, and **in that**
the releasing device (18) is configured and provided to enter and expand a space between the detent spring (27) and the detent member (29) upon release of the detent connection.

2. The rear parcel shelf according to Claim 1,
having a recessed grip lower part (13) arranged at the underside of the storage plate (11), which forms, together with the storage plate (11), a recessed grip (15), which is accessible when the actuating member is actuated.

3. The rear parcel shelf according to Claim 1,
whereby the releasing device (18) is a component, in particular a one-piece component, of a push-button lower part (16) that belongs to the actuating member and that includes a guide member (19), which is fixed in a guide contour (20) which is associated with the storage plate (11) and, in particular, being connected with this in a one-piece manner.

4. The rear parcel shelf according to Claim 3,
whereby the guide contour (20) has a limiting pin (21), which engages with a recess (21') of the guide member (19).

5. The rear parcel shelf according to Claim 3 or 4,
whereby the guide contour (20) has an extension (23), on which there is arranged a spring member (22), which, under tensioning, abuts an underside of the push-button (12), in particular which abuts the push-button lower part (16).

6. The rear parcel shelf according to Claim 3, 4 or 5,
whereby the releasing device (18) is designed as a wedge (17) angled in at the free end, and whereby the releasing device (18) is situated under the push-button (12) in a manner perpendicular to a plane defined by the storage plate (11).

7. The rear parcel shelf according to Claim 6,
whereby the releasing device (18) is slit in the middle at the free end.

8. The rear parcel shelf according to Claim 1,
whereby the detent spring (27) has a detent cam (27') provided for engagement in a recess at the detent member (29), and whereby the detent member (29) tapers off at the free end in the form of a ramp (32).

9. A fixing device for retaining a rear parcel shelf having a storage plate (11) forming a storage surface in a motor vehicle, having an actuating member, in particular a push-button (12), provided to release the retention,
whereby the actuating member includes a releasing device (18) provided for releasing a detent connection which locks the rear parcel shelf in place, **characterised in that**
the detent connection is effected between a detent spring (27), which is connected to a part (26) which is attached to the vehicle, and a detent member (29), which is connected to the storage surface, and **in that**
the releasing device (18) is configured and provided to enter and expand a space between the detent spring (27) and the detent member (29) upon release of the detent connection.

10. The fixing device according to Claim 9,
having a recessed grip lower part (13) which is arranged at the underside of the storage plate (11) and which forms, together with the storage plate (11), a recessed grip (15), which is accessible when the actuating member is actuated.

11. The fixing device according to Claim 9,
whereby the releasing device (18) is a component, in particular a one-piece component, of a push-button lower part (16) that belongs to the actuating member and that includes a guide member (19), which is fixed in a guide contour (20) that is associated with the storage plate (11) and that is connected with this, in particular in a one-piece manner.

12. The fixing device according to Claim 11,
whereby the guide contour (20) has a limiting pin (21), which engages in a recess (21') of the guide member (19).

13. The fixing device according to Claim 11 or 12,
whereby the guide contour (20) has an extension (23), on which there is arranged a spring member (22), which, under tensioning, abuts an underside of the push-button (12), in particular which abuts the push-button lower part (16).

14. The fixing device according to Claim 11, 12 or 13,
whereby the releasing device (18) is designed as a wedge (17) angled in at the free end, and whereby the releasing device (18) is situated under the push-button (12) in a manner perpendicular to a plane defined by the storage plate (11).

15. The fixing device according to Claim 14,
whereby the releasing device (18) is slit in the middle at the free end.

16. The fixing device according to Claim 9,
whereby the detent spring (27) has a detent cam (27') provided for engagement in a recess at the detent member (29), and whereby the detent member (29) tapers off at the free end in the form of a ramp (32).

17. A motor vehicle having a rear parcel shelf according to one of Claims 1 to 8.

18. A motor vehicle having a fixing device according to one of Claims 9 to 16.

19. The motor vehicle according to Claim 17 or 18,
whereby, at a part attached to the vehicle, in particular at a take-up member (25) on which the storage plate (11) indirectly or directly bears, a micro switch (33) is arranged, which protrudes through an opening (34) of the take-up member (25) with a feeler head head, such that the micro switch (33) is actuated when the storage plate (11) rests on it.

20. The motor vehicle according to Claim 19,
whereby an electrical signal, based on a switching position of the micro switch (33), for triggering a display with regard to the correct positioning and/or retention of the storage surface or the storage plate (11), is provided.

## Revendications

1. Plage arrière pour l'utilisation dans un véhicule automobile, comprenant une fixation pour son blocage et une tablette (11) notamment d'une seule pièce formant la surface de plage, la fixation comprenant un élément d'actionnement prévu pour desserrer le blocage, notamment un bouton (12),
un connexion par encliquetage bloquant la surface de plage étant prévue et l'élément d'actionnement comprenant un déclencheur (18) prévu pour desserrer la connexion par encliquetage,
**caractérisée en ce que** la connexion par encliquetage est réalisée entre un ressort d'encliquetage (27) connecté à une partie fixée au véhicule (26) et un élément d'encliquetage (29) connecté à la surface de plage, et **en ce que** le déclencheur (18) est réalisé et prévu pour s'enfoncer et écarter un espace intermédiaire entre le ressort d'encliquetage (27) et l'élément d'encliquetage (29) lors du desserrage de la connexion par encliquetage.

2. Plage arrière selon la revendication 1,
comprenant une partie inférieure de creux de préhension (13) disposée sur le côté inférieur de la tablette (11), qui forme conjointement avec la tablette (11) un creux de préhension (15) qui est accessible lorsque l'élément d'actionnement est actionné.

3. Plage arrière selon la revendication 1,
dans laquelle le déclencheur (18) fait partie, notamment partie d'une seule pièce, d'une partie inférieure de bouton (16) appartenant à l'élément d'actionnement, qui comprend un élément de guidage (19) qui est fixé dans un contour de guidage (20) associé à la tablette (11), notamment connecté d'une seule pièce à celle-ci.

4. Plage arrière selon la revendication 3,
dans laquelle le contour de guidage (20) présente une goupille de limitation (21) qui vient en prise dans un évidement (21') de l'élément de guidage (19).

5. Plage arrière selon la revendication 3 ou 4,
dans laquelle le contour de guidage (20) présente une saillie (23) sur laquelle est disposé un élément de ressort (22) qui s'applique avec contrainte contre un côté inférieur du bouton (12), notamment contre la partie inférieure (16) du bouton.

6. Plage arrière selon la revendication 3, 4 ou 5,
dans laquelle le déclencheur (18) est réalisé sous forme de coin biseauté (17) à l'extrémité libre et dans laquelle le déclencheur (18) se trouve verticalement sous le bouton (12) par rapport à un plan défini par la tablette (11).

7. Plage arrière selon la revendication 6,
dans laquelle le déclencheur (18) est fendu centralement à l'extrémité libre.

8. Plage arrière selon la revendication 1,
dans laquelle le ressort d'encliquetage (27) présente une came d'encliquetage (27') prévue pour s'engager dans un évidement sur l'élément d'encliquetage (29) et dans laquelle l'élément d'encliquetage (29) se termine à son extrémité libre en forme de rampe (32).

9. Fixation pour le blocage d'une plage arrière, comprenant une tablette (11) formant une surface de plage dans un véhicule automobile, avec un élément d'actionnement prévu pour desserrer le blocage, notamment un bouton (12),
l'élément d'actionnement comprenant un déclencheur (18) prévu pour desserrer une connexion par encliquetage bloquant la plage arrière, **caractérisée en ce que** la connexion par encliquetage est réalisée entre un ressort d'encliquetage (27) connecté à une partie fixée au véhicule (26) et un élément d'encliquetage (29) connecté à la surface de plage, et **en ce que** le déclencheur (18) est réalisé et prévu pour s'enfoncer et écarter un espace intermédiaire entre le ressort d'encliquetage (27) et l'élément d'encliquetage (29) lors du desserrage de la connexion par encliquetage.

10. Fixation selon la revendication 9,
comprenant une partie inférieure de creux de préhension (13) disposée sur le côté inférieur de la tablette (11), qui forme conjointement avec la tablette (11) un creux de préhension (15) qui est accessible lorsque l'élément d'actionnement est actionné.

11. Fixation selon la revendication 9,
dans laquelle le déclencheur (18) fait partie, notamment partie d'une seule pièce, d'une partie inférieure de bouton (16) appartenant à l'élément d'actionnement, qui comprend un élément de guidage (19), qui est fixé dans un contour de guidage (20) associé à la tablette (11), notamment connecté d'une seule pièce à celle-ci.

12. Fixation selon la revendication 11,
dans laquelle le contour de guidage (20) présente une goupille de limitation (21) qui vient en prise dans un évidement (21') de l'élément de guidage (19).

13. Fixation selon la revendication 11 ou 12,
dans laquelle le contour de guidage (20) présente une saillie (23) sur laquelle est disposé un élément de ressort (22) qui s'applique avec contrainte contre un côté inférieur du bouton (12), notamment contre la partie inférieure (16) du bouton.

14. Fixation selon la revendication 11, 12 ou 13,
dans laquelle le déclencheur (18) est réalisé sous forme de coin biseauté (17) à l'extrémité libre et dans laquelle le déclencheur (18) se trouve verticalement sous le bouton (12) par rapport à un plan défini par la tablette (11).

15. Fixation selon la revendication 14,
dans laquelle le déclencheur (18) est fendu centralement à l'extrémité libre.

16. Fixation selon la revendication 9,
dans laquelle le ressort d'encliquetage (27) présente une came d'encliquetage (27') prévue pour s'engager dans un évidement sur l'élément d'encliquetage (29) et dans laquelle l'élément d'encliquetage (29) se termine à son extrémité libre en forme de rampe (32).

17. Véhicule automobile comprenant une plage arrière selon l'une quelconque des revendications 1 à 8.

18. Véhicule automobile comprenant une fixation selon l'une quelconque des revendications 9 à 16.

19. Véhicule automobile selon la revendication 17 ou 18, dans lequel un minirupteur (33) est disposé sur une partie fixée au véhicule, notamment sur un élément de réception (25) sur lequel repose la tablette (11) de manière directe ou indirecte, ce minirupteur passant avec une tête poussoir à travers une ouverture (34) de l'élément de réception (25) de telle sorte que lorsque la tablette (11) est en appui, le minirupteur (33) soit actionné.

20. Véhicule automobile selon la revendication 19,
dans lequel on prévoit un signal électrique basé sur une position de commutation du minirupteur (33), pour la commande d'un affichage relatif au positionnement correct et/ou au blocage de la surface de plage ou de la tablette (11).
